# FASCICULE DE BREVET EUROPEEN

(11) **EP 1 262 695 B1**
(45) Date de publication et mention de la délivrance du brevet: **03.03.2004**
(21) Numéro de dépôt: 01870116.9
(22) Date de dépôt: 30.05.2001
(51) Int. Cl.: F16J 15/16

(54) **Joint plat d'étanchéité**
Dichtende Verbindungsplatte
Sealing joint plate

(43) Date de publication de la demande: 04.12.2002
(73) Titulaire: Techspace aero, 4041 Milmort - Herstal (BE)
(72) Inventeur: Lhoest, André Lucien Jacques Marc, 4500 Huy (BE); Bruhann, Maja, 1970 Wezembeek-Oppem (BE); Ryhon, Sébastian, 4102 Ougree (BE)
(74) Mandataire: Van Malderen, Joelle

(56) Documents cités:
- EP-A- 0 277 724
- EP-A- 0 903 519
- EP-A- 0 979 961
- GB-A- 2 102 897
- GB-A- 2 261 932
- US-A- 4 730 832
- US-A- 4 854 600
- PATENT ABSTRACTS OF JAPAN vol. 005, no. 022 (M-054), 10 février 1981 (1981-02-10) & JP 55 150493 A (NISSAN MOTOR CO LTD), 22 novembre 1980 (1980-11-22)

## Description

### Objet de l'invention

La présente invention se rapporte à un nouveau joint, éventuellement précontraint, destiné à assurer l'étanchéité d'une enceinte dans le booster ou compresseur basse pression d'un moteur de type turboréacteur.

En ce qui concerne le domaine d'application, l'invention s'applique chaque fois qu'une étanchéité est requise dans les enceintes d'une turbomachine, en particulier au niveau du disque de soufflante.

### Etat de la technique

Il est connu que, dans les turboréacteurs, l'étanchéité entre les différentes parties du compresseur est nécessaire pour éviter les fuites entre les enceintes maintenues à des pressions différentes, voir par example le document EP-A-903 519.

Ainsi, au niveau des premiers étages du compresseur, il est nécessaire d'assurer l'étanchéité entre la partie interne du tambour, qui sert de support des aubes mobiles du flux primaire, et le disque qui supporte les aubes de la soufflante.

Actuellement, le montage du joint d'étanchéité est assuré en vissant une pièce métallique sur une bride spécifique. La réalisation de cette bride implique un supplément de matière important et donc également un supplément de coût.

De plus, le joint étant vissé sur la bride, cela implique des contraintes importantes dans celui-ci et un coût d'assemblage important.

### Buts de l'invention

La présente invention vise à fournir une solution qui soit exempte des inconvénients de l'état de la technique.

L'invention vise en particulier à fournir un dispositif d'étanchéité plus simple de conception et de montage et nécessitant moins de matière.

Un but complémentaire de l'invention est de fournir un joint d'étanchéité réalisable dans des matériaux communs.

Un autre but de l'invention est de proposer un joint soumis à des sollicitations moindres.

### Principaux éléments caractéristiques de l'invention

La présente invention vise donc à apporter une solution à ces différents problèmes en proposant de disposer un joint d'étanchéité qui permet d'assurer l'étanchéité d'une enceinte dans le booster ou compresseur basse pression d'un moteur de type turboréacteur qui n'est pas solidaire mécaniquement de l'ensemble, c'est-à-dire ne comprend pas de fixations mécaniques.

Plus précisément, la présente invention se rapporte à un dispositif d'étanchéité pour une enceinte pressurisée du compresseur basse pression d'un moteur de type turboréacteur, comprenant un joint situé entre une bride solidaire du tambour supportant les aubes mobiles des étages de compression du flux primaire et le disque rotatif supportant les aubes tournantes de la soufflante, l'extrémité de la bride étant cotée à un diamètre fixe.

La présente invention est caractérisée par le fait que le joint est maintenu en place, sans fixation mécanique, d'une part par contact avec un talon prolongeant la bride et d'autre part par contact avec ledit disque.

De préférence, ledit joint est en métal ou alliage métallique léger, de préférence en aluminium.

Avantageusement, le serrage de la face d'appui du joint sur ledit talon est réalisé par l'élasticité du joint.

Toujours avantageusement, l'étanchéité est assurée au niveau d'une face plane du talon en contact avec une face plane du joint.

Selon une autre caractéristique de l'invention, le centrage du joint et son maintien vis-à-vis des forces centrifuges est assuré par le contact d'un téton du joint avec la partie cylindrique dudit talon.

De préférence, la dimension du joint selon l'axe du moteur est supérieure à la longueur axiale disponible après montage, c'est à dire que le joint est placé avec précontrainte.

### Brève description des figures

La figure 1 représente une vue en coupe axiale d'un compresseur basse pression et de la soufflante de turboréacteur.

La figure 2.a représente une vue en coupe axiale pour une première forme d'exécution d'un dispositif d'étanchéité selon l'état de la technique.

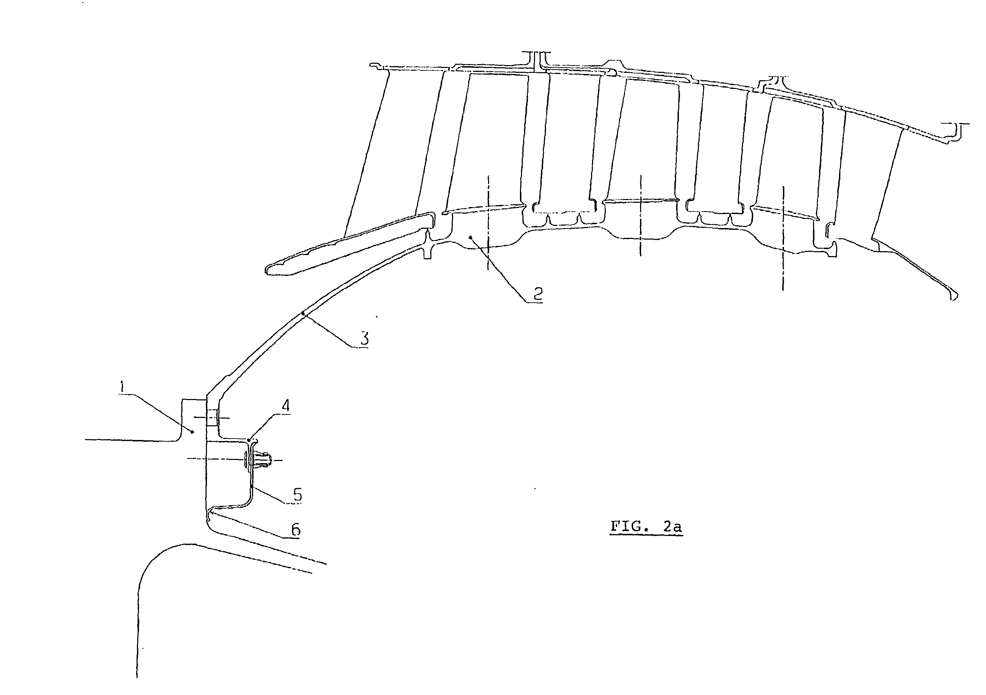

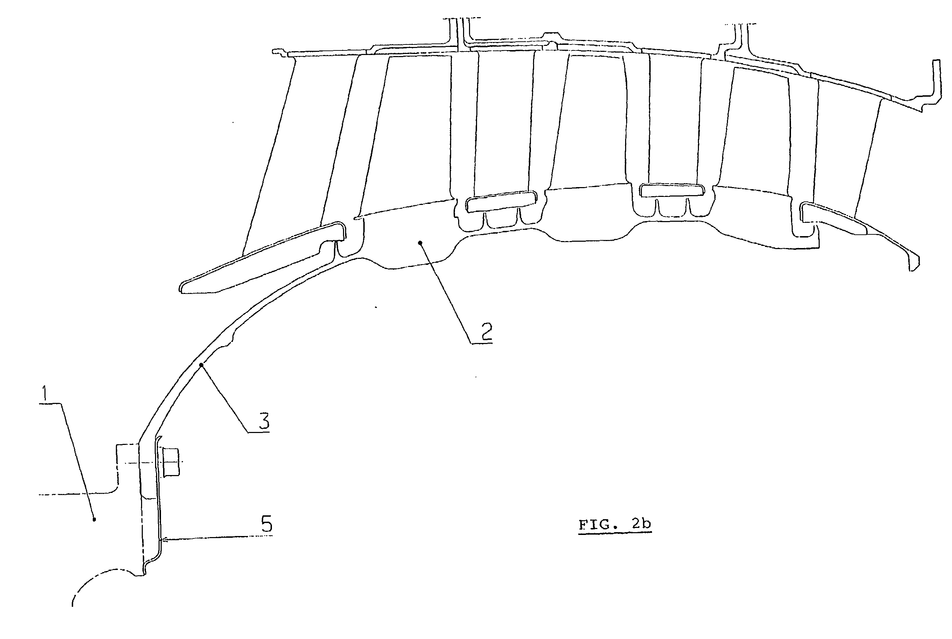

La figure 2.b représente une vue en coupe axiale pour une deuxième forme d'exécution d'un dispositif d'étanchéité selon l'état de la technique.

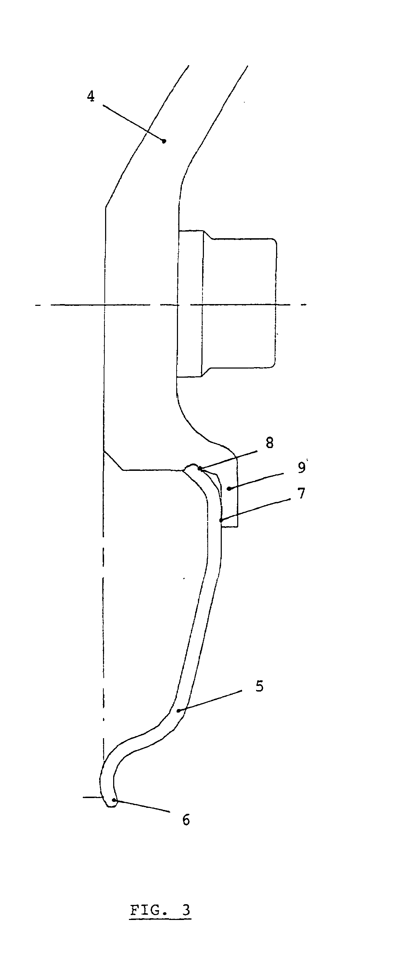

La figure 3 représente une vue en coupe axiale pour une forme d'exécution préférée du dispositif d'étanchéité selon la présente invention.

### Description de forme d'exécutions selon l'état de la technique

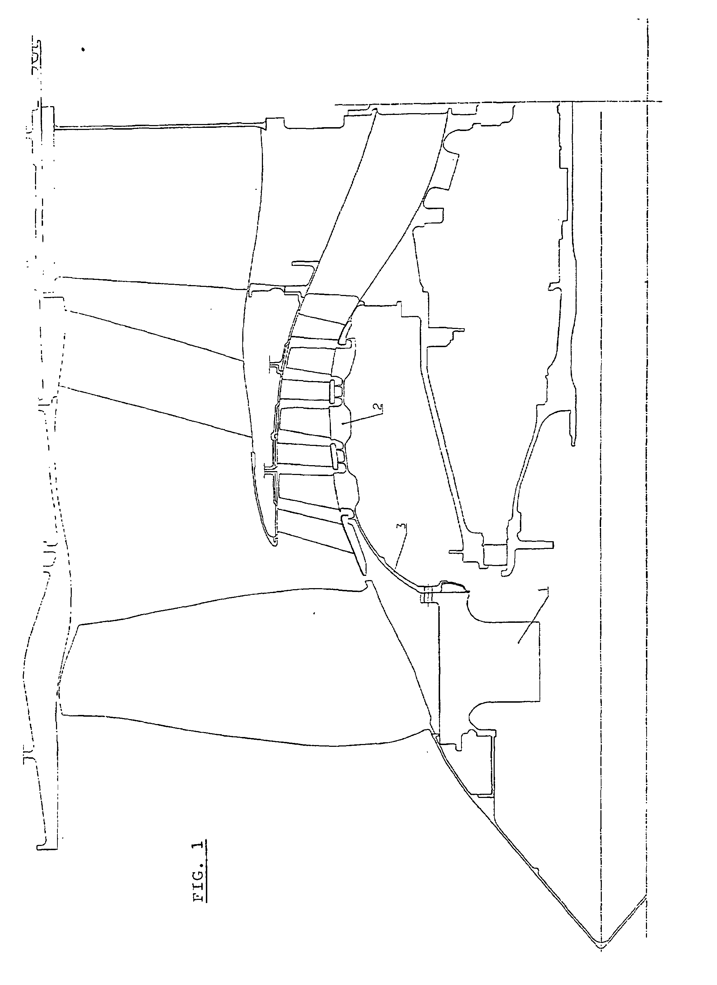

La figure 1 représente le compresseur basse pression (ou booster) couplé à la soufflante dans le cas d'un moteur de type turboréacteur. Le compresseur est constitué d'un tambour 2 supportant les étages d'aubes mobiles du flux primaire ou étages rotoriques et qui tourne par rapport à la partie fixe statorique qui supporte les étages redresseurs. L'enceinte délimitée par la partie interne du tambour étant pressurisée, il convient d'assurer l'étanchéité au moyen d'une flasque 3 entre celle-ci et l'air ambiant, au niveau du disque 1 qui supporte les aubes de la soufflante. Cette étanchéité est généralement assurée par un joint en tôle présentant la symétrie de révolution et venant se placer contre le disque 1.

Selon une première forme d'exécution représentée à la figure 2.a, le tambour 2 est prolongé sur le côté en regard du disque 1 par une bride souple 4, jouant un rôle de ressort et qui se dilate sous l'effet des forces centrifuges auxquelles est soumis le tambour. L'extrémité de cette bride est cotée à un diamètre fixe. Le joint d'étanchéité 5 est boulonné sur cette bride 4 et présente une partie recourbée 6 en contact avec le disque 1. En outre, la complexité de la bride et du joint dans cette première forme d'exécution empêche tout grenaillage et donc d'augmenter la durée de vie desdites pièces.

Une autre solution a été proposée dans l'état de la technique, correspondant à la forme d'exécution représentée sur la figure 2.b. Ici à nouveau, le joint est boulonné sur une bride solidaire du tambour. Ce joint, réalisé en titane, est coûteux et de plus casse sous l'effet de la dilatation du tambour.

### Description d'une forme d'exécution préférée de l'invention

Les caractéristiques innovantes à la base de la présente invention sont :
- l'appui du joint sur le tambour via un simple talon ;
- l'absence de visserie pour maintenir le joint.

Dans le nouveau dispositif proposé, comme représenté à la figure 3, le joint 5 est maintenu en place par un talon 9 réalisé dans le tambour. Le serrage de la face d'appui sur ce talon est réalisé par l'élasticité du joint 5 lui-même. L'étanchéité est assurée au niveau d'une face plane du talon 9 en contact axial avec une face plane du joint (figure 3, repère 7). Le centrage du joint et son maintien vis-à-vis des forces centrifuges est assuré par le contact radial d'un téton avec la partie cylindrique du talon (figure 3, repère 8). Enfin, le contact du joint 5 est axial entre le disque de soufflante 1 et la partie terminale recourbée 6 du joint 5.

La taille du joint 5 peut être supérieure au logement disponible après montage. En conséquence, le joint est comprimé lors du montage (ΔP ∼ 1,5 bar), ce qui permet d'éviter l'usage de vis et boulons et donc les facteurs d'augmentation de contrainte. Toutefois, les essais préalables ont montré que ce contact avec précontrainte au niveau de la partie cylindrique du talon n'est pas nécessaire. En effet, le joint, réalisé par exemple en aluminium, se dilate plus vite que le tambour sous l'effet des forces centrifuges, de sorte qu'il se produit un léger frettage.

De préférence, le joint selon l'invention est réalisé dans un matériau métallique léger et bon marché facilement formable. Il présente ainsi l'avantage d'être réalisable en aluminium, alors que précédemment on recourrait à l'acier ou au titane (pièce CF1). Son module de Young est faible. Sous l'entraînement du disque de soufflante, il se dilate au moins aussi vite que le tambour. Il n'y a pas de perte de centrage ou d'étanchéité, ce qui empêche la pièce de bouger et d'être rapidement détruite.

En résumé, par rapport aux solutions existantes, cette solution se distingue par :
- des sollicitations moindres dans le joint ;
- un montage plus simple ;
- une conception simplifiée du tambour grâce à une bride plus petite nécessitant moins de matière ;
- un joint plus simple et réalisable avec des matériaux communs.

## Revendications

1. Dispositif d'étanchéité pour une enceinte pressurisée du compresseur basse pression d'un moteur de type turboréacteur, comprenant un joint (5) situé entre une bride (4) solidaire du tambour (2) supportant les aubes mobiles des étages de compression du flux primaire et le disque rotatif (1) supportant les aubes tournantes de la soufflante, l'extrémité de la bride (4) étant cotée à un diamètre fixe, **caractérisé en ce que** ledit joint (5) est maintenu en place, sans fixation mécanique, d'une part par contact avec un talon (9) prolongeant la bride (4) et d'autre part par contact avec ledit disque (1).

2. Dispositif selon la revendication 1, **caractérisé en ce que** le serrage de la face d'appui du joint (5) sur ledit talon (9) est réalisé par l'élasticité du joint (5).

3. Dispositif selon la revendication 1 ou 2, **caractérisé en ce que** l'étanchéité est assurée au niveau d'une face plane du talon (9) en contact avec une face plane du joint (7).

4. Dispositif selon l'une quelconque des revendications précédentes, **caractérisé en ce que** le centrage du joint (5) et son maintien vis-à-vis des forces centrifuges est assuré par le contact d'un téton du joint (5) avec la partie cylindrique dudit talon (8).

5. Dispositif selon l'une quelconque des revendications précédentes, **caractérisé en ce que** la dimension du joint (5) selon l'axe du moteur est supérieure à la longueur axiale disponible après montage, c'est à dire que le joint (5) est placé avec précontrainte.

6. Dispositif selon l'une quelconque des revendications précédentes, **caractérisé en ce que** ledit joint (5) est réalisé en un métal ou alliage métallique léger, de préférence en aluminium.

## Claims

1. Sealing device for a pressurised enclosure of the low pressure compressor on a turbojet type engine, comprising a seal (5) located between a flange (4) attached to the drum (2) supporting the mobile blades of the compression stages for the primary flow and the rotary disc (1) supporting the rotating blades of the blower, the end of the flange (4) having a set diameter, **characterised in that** said seal (5) is held in place, without any mechanical fixing, on the one hand by contact with a heel (9) extending the flange (4) and, on the other hand, by contact with said disc (1).

2. Device according to Claim 1, **characterised in that** the clamping of the supporting side of the seal (5) on said heel (9) is achieved by the elasticity of the seal (5).

3. Device according to Claim 1 or 2, **characterised in that** the sealing is ensured at the level of one flat side of the heel (9) in contact with a flat side of the seal (7).

4. Device according to any one of the preceding claims, **characterised in that** the seal (5) is centred and maintained with regard to the centrifugal forces through the contact with a centring pin of the seal (5) with the cylindrical part of said heel (8).

5. Device according to any one of the preceding claims, **characterised in that** the dimensions of the seal (5) relative to the axis of the engine is greater than the axial length available after assembly, i.e. the seal (5) is placed with pre-stressing.

6. Device according to any one of the preceding claims, **characterised in that** said seal (5) is made of a light metal or metal alloy, preferably aluminium.

## Patentansprüche

1. Dichtung für einen Druckraum des Niederdruckverdichters eines Antriebs vom Typ Turbinenluftstrahltriebwerk, bestehend aus einer Dichtung (5), die sich zwischen einem Flansch (4), der mit der Trommel (2) verbunden ist, die die Laufschaufeln der Verdichtungsstufen des Primärstroms trägt, und dem Läufer (1), der die Laufschaufeln des Gebläses trägt, befindet, wobei das Ende des Flanschs (4) einen festen Durchmesser hat, **dadurch gekennzeichnet, dass** die besagte Dichtung (5) ohne mechanische Befestigung einerseits durch den Kontakt mit einem Steg (9), der die Verlängerung des Flanschs (4) bildet, und andererseits durch den Kontakt mit dem besagten Läufer (1) in Position gehalten wird.

2. Vorrichtung nach Anspruch 1, **dadurch gekennzeichnet, dass** die Auflagefläche der Dichtung (5) durch die Elastizität der Dichtung (5) auf dem besagten Steg (9) gehalten wird.

3. Vorrichtung nach Anspruch 1 oder 2, **dadurch gekennzeichnet, dass** die Abdichtung bei einer ebenen Fläche des Stegs (9) in Kontakt mit einer ebenen Fläche der Dichtung (7) erreicht wird.

4. Vorrichtung nach irgendeinem der vorhergehenden Ansprüche, **dadurch gekennzeichnet, dass** die Zentrierung der Dichtung (5) und ihr Halt gegen die Fliehkräfte durch den Kontakt eines Zapfens der Dichtung (5) mit dem zylindrischen Teil des besagten Stegs (8) gewährleistet wird.

5. Vorrichtung nach irgendeinem der vorhergehenden Ansprüche, **dadurch gekennzeichnet, dass** die Abmessungen der Dichtung (5) entlang der Achse des Antriebs größer sind als die axiale Länge, die nach der Montage Zur Verfügung steht, d.h. dass die Dichtung (5) mit Vorspannung eingebaut wird.

6. Vorrichtung nach irgendeinem der vorhergehenden Ansprüche, **dadurch gekennzeichnet, dass** die besagte Dichtung (5) aus Metall oder Leichtmetall, vorzugsweise Aluminium besteht.
